(19) Europäisches Patentamt / European Patent Office / Office européen des brevets

(11) **EP 2 503 368 A1**

(12) **EUROPEAN PATENT APPLICATION**

(43) Date of publication:
26.09.2012 Bulletin 2012/39

(51) Int Cl.:
*G02B 6/028* (2006.01)        *G02B 6/036* (2006.01)

(21) Application number: 11305328.4

(22) Date of filing: 24.03.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Draka Comteq B.V.**
**1083 HJ Amsterdam (NL)**

(72) Inventors:
• **Molin, Denis**
**91210 Draveil (FR)**

• **Sillard, Pierre**
**78150 Le Chesnay (FR)**
• **Bigot-Astruc, Marianne**
**91460 Marcoussis (FR)**
• **Gooijer, Frans**
**5627 ME Eindhoven (NL)**
• **Achten, Franciscus Johannes**
**5032 EM Tilburg (NL)**

(74) Representative: **op den Brouw-Sprakel, Vera**
**Stefanie Irene**
**Algemeen Octrooi- en Merkenbureau**
**P.O. Box 645**
**5600 AP  Eindhoven (NL)**

(54)    **Multimode optical fiber with improved bend resistance**

(57)    This multimode optical fiber comprises an optical core surrounded by an outer cladding. The optical core comprises an inner core having a graded-index profile n(r) with a relative refractive index percent

$$\Delta = \frac{n_0^2 - n_{cl}^2}{2n_0^2}$$ , where $n_0$ is the maximum index of the

inner core and $n_{cl}$ is the index of the outer cladding, and having a radius $r_1$ between 30 µm and 50 µm, and wherein $\frac{\sqrt{2\Delta}}{r_1}$ is greater than or equal to $5.1 \times 10^{-3}$ µm⁻¹; an

inner cladding having a radius $r_2$, wherein $r_2$-$r_1$ is between 1 µm and 3 µm; a depressed trench having a radius $r_3$, wherein $r_3$-$r_2$ is between 3 µm and 7 µm and having a negative refractive index difference $\Delta n_3$ with respect to the outer cladding between $-10 \times 10^{-3}$ and $-5 \times 10^{-3}$. At a wavelength of 850 nm, the fiber has bending losses below 0.3 dB for 2 turns for a radius of curvature of 5 mm.

Fig.1

**Description**

The present invention pertains to the field of optical fiber transmissions and relates more particularly to a trench-assisted MultiMode optical Fiber (MMF) that exhibits an improved resistance to bending.

An optical fiber conventionally consists of an optical core, also called inner core, for transmitting and possibly amplifying an optical signal, and of an optical cladding, also called outer cladding, for confining the optical signal within the inner core. To that end, the refractive index of the inner core $n_c$ is greater than the refractive index of the outer cladding $n_g$.

MMFs are frequently used for short-distance applications and for local networks. The inner core of an MMF typically has a diameter of 50 $\mu$m or more, whereas the inner core of a Single Mode Fiber, SMF has a diameter is approximately 9 $\mu$m. For a given wavelength, several optical modes conveying the same information propagate simultaneously along the MMF.

MMFs with a diameter of 50 $\mu$m have been the subject of international standardization under standard ITU-T G.651 which in particular defines criteria for bandwidths, numerical aperture and core diameter, for the needs of compatibility between fibers.

The numerical aperture (NA) of an optical fiber can be defined as:

$$NA = \sqrt{n_c^2 - n_g^2}$$

where $n_c$ is the refractive index of the inner core and $n_g$ is the refractive index of the outer cladding.

For optical fibers, the index profile is generally qualified in relation to the tracing of the graph which plots the function associating the refractive index with the fiber radius. Conventionally, the distance r to the center of the fiber is shown along the abscissa, and the difference between the refractive index at a given distance of the center of the fiber and the refractive index of the fiber outer cladding is shown along the ordinate axis. The index profile is therefore referred to as a "step", a "trapezoidal", a "triangular" or an "alpha" (also called graded-index) profile for graphs having the respective shapes of a step, a trapezoid, a triangle or a gradient. These curves are representative of the theoretical or set profile of the fiber, the manufacturing stresses of the fiber possibly leading to a slightly different profile.

In step index fibers, the different modes propagate at different speeds along the fiber, which causes spreading of the light pulse which may become comparable to the spacing between pulses, and lead to an unacceptable error rate. To reduce intermodal dispersion in an MMF, it has been proposed to manufacture graded-index fibers with an "alpha" core profile. Such fiber has been used for many years and its characteristics have been described in particular in the publications: "Multimode theory of graded-core fibers" by D. Gloge et al., Bell System Technical Journal 1973, pp. 1563-1578, and "Comprehensive theory of dispersion in graded-index optical fibers" by G. Yabre, Journal of Lightwave Technology, February 2000, vol. 18, No.2, pp. 166-177.

A typical graded-index profile can be defined as the relationship between the value n of the refractive index at one point and the distance r from this point to the center of the fiber:

$$n(r) = n_0\sqrt{1 - 2\Delta\left(\frac{r}{a}\right)^\alpha} \qquad \text{(Equation 1)}$$

where $a \geq 1$ ($\alpha \to \infty$ corresponding to a step index), $n_0$ is the maximum index value of the multimode core (generally corresponding to the index value of the center of the inner core) and a is the radius of the multimode core and

$$\Delta = \frac{\left(n_0^2 - n_{cl}^2\right)}{2n_0^2} \qquad \text{(Equation 2)}$$

where $n_{cl}$ is the refractive index value of the outer cladding (which is most often made of silica).

A graded-index MMF therefore has a core profile with revolution symmetry such that, along any radial direction, the value of the index decreases continuously from the center of the fiber towards its periphery.

When a multimode light signal propagates in said graded-index core, the different modes see a different propagation medium, which has a different effect on their rate of propagation. By adjusting the value of parameter $\alpha$, it is theoretically possible to obtain a group velocity that is practically equal for all the modes and hence reduced intermodal dispersion.

For MMFs, the higher the numerical aperture is, the lower the macrobending losses (referred to hereafter as "bending losses") are.

Known MMFs with an inner core diameter of more than 50 $\mu$m, such as known fibers with an inner core diameter of 62.5 $\mu$m and a numerical aperture of 0.275 (so-called 62.5 $\mu$m MMF), or with an inner core diameter of 80 $\mu$m and a numerical aperture of 0.3(so-called 80 $\mu$m MMF), are expected to provide sufficient bend resistance for many applications.

However, for tighter bend radii such as 5 mm, these known fibers exhibit significant bend losses that can be critical for high speed transmissions, which will be needed in compact consumer electronic devices.

It is therefore sought to improve the bend resistance of MMFs in which the diameter of the inner core is higher than 50 $\mu$m.

Document WO-A-2010 036684 deals with large core fibers. However, the fibers disclosed exhibit an inner core radius a and a relative refractive index percent $\Delta$ such that:

$$\frac{\sqrt{2\Delta}}{a} < 5.1 \times 10^{-3} \ \mu m^{-1}.$$

This does not make it possible to reduce the microbending losses, because for a given value of $\Delta$, enlarging the inner core will lead to larger microbending losses and the above range of values of $\sqrt{2\Delta}/a$ will lead to undesirably large microbending losses.

The invention aims at remedying the aforementioned drawbacks of the prior art.

To that end, the invention provides a multimode optical fiber comprising an optical core surrounded by an outer cladding, the optical core comprising, from the center to the periphery:

an inner core having a graded-index profile n(r) with a relative refractive index percent

$$\Delta = \frac{n_0^2 - n_{cl}^2}{2n_0^2},$$

where $n_0$ is the maximum refractive index value of the inner core and $n_{cl}$ is the refractive index value of the outer cladding, and having a radius $r_1$ comprised between 30 $\mu$m and 50 $\mu$m, and wherein $\sqrt{2\Delta}/r_1$ is greater than or equal to $5.1 \times 10^{-3}$ $\mu m^{-1}$,
an inner cladding having a radius $r_2$, wherein $r_2$-$r_1$ is comprised between 1 $\mu$m and 3 $\mu$m,
a depressed trench having a radius $r_3$, wherein $r_3$-$r_2$ is comprised between 3 $\mu$m and 7 $\mu$m and having a negative refractive index difference $\Delta n_3$ with respect to the outer cladding comprised between -10$\times$10$^{-3}$ and -5$\times$10$^{-3}$,
wherein, at a wavelength of 850 nm, the fiber has bending losses below 0.3 dB for 2 turns for a radius of curvature of 5 mm.

According to particular embodiments, the optical fiber of the invention may further have one or more of the following:

$\sqrt{2\Delta}/r_1$ greater than or equal to $5.4 \times 10^{-3}$ $\mu m^{-1}$;
the radius $r_1$ of the inner core comprised between 35 $\mu$m and 50 $\mu$m;
at a wavelength of 850 nm, bending losses below 0.2 dB for 2 turns for a radius of curvature of 5 mm;
a diameter of the inner core of 62.5 $\mu$m;
a diameter of the inner core of 80 $\mu$m.

The invention also provides an optical system comprising at least a portion of a multimode optical fiber as succinctly described above.

Other characteristics and advantages of the invention will become apparent on reading the following description of particular embodiments of the invention given by way of non-limiting examples and with reference to the accompanying drawings, wherein:

- Figure 1 is a graph showing the refractive index profile of an optical fiber according to the present invention, in a particular embodiment;
- Figure 2 is a graph showing the bending losses according to the bending radius for an example of an optical fiber according to the present invention, in comparison with an example of a prior art optical fiber; and
- Figure 3 is a graph showing the bending losses according to the bending radius for another example of an optical fiber according to the present invention, in comparison with another example of a prior art optical fiber.

The optical fiber according to the invention is a multimode transmission fiber.

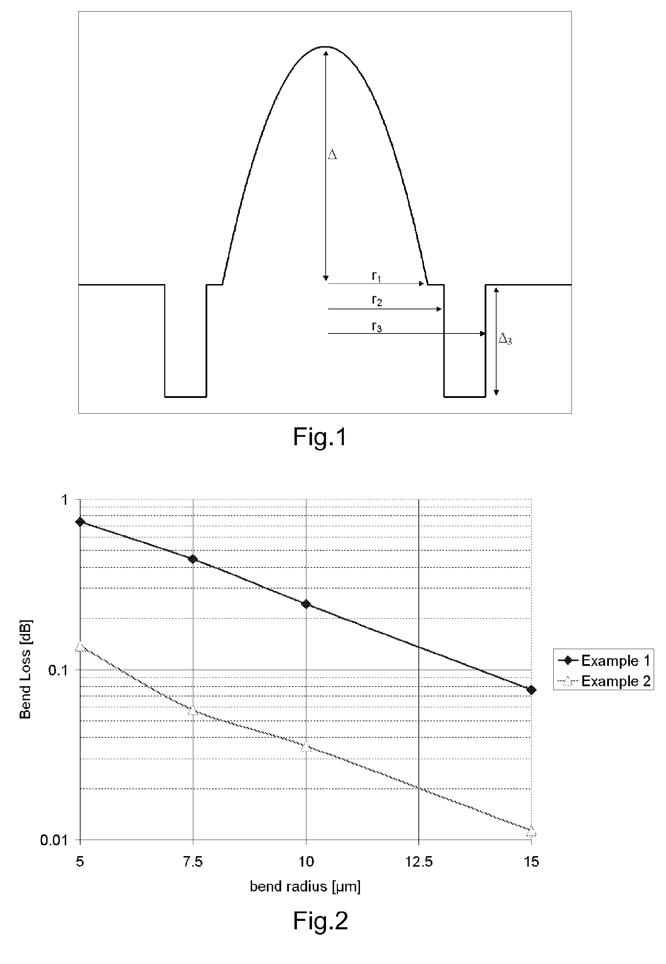

As shown in **Figure 1,** which illustrates the refractive index profile of a multimode optical fiber according to the invention in a particular embodiment, the fiber comprises, from its center to its periphery, an inner core, an inner cladding surrounding the inner core, a depressed trench surrounding the inner cladding and an outer cladding.

The inner core has a radius $r_1$ comprised between 30 $\mu$m and 50 $\mu$m, preferably between 35 $\mu$m and 50 $\mu$m, and a graded-index profile n(r) with a relative refractive index percent $\Delta$ such that:

$$\frac{\sqrt{2\Delta}}{r_1} \geq 5.1 \times 10^{-3} \ \mu m^{-1}$$

where $\Delta$ is defined as follows:

$$\Delta = \frac{\left(n_0^2 - n_{cl}^2\right)}{2n_0^2}$$

where $n_0$ is the maximum index value of the inner core (generally corresponding to the refractive index value of the center of the inner core) and $n_{cl}$ is the refractive index value of the outer cladding.

The inner cladding has a radius $r_2$. According to the invention, the value of $r_2$-$r_1$ (i.e. the space between the graded-index core and the depressed trench) is comprised between 1 $\mu$m and 3 $\mu$m.

The depressed trench has a radius $r_3$ and a negative refractive index difference $\Delta n_3$ with respect to the outer cladding. According to the invention, the value of $r_3$-$r_2$ (i.e. the width of the depressed trench) is comprised between 3 $\mu$m and 7 $\mu$m and the value of $\Delta n_3$ (i.e. the depth of the depressed trench) is comprised between -10×10$^{-3}$ and -5×10$^{-3}$.

At a wavelength of 850 nm, the fiber has bending losses below 0.3 dB for 2 turns for a radius of curvature of 5 mm. More preferably, at a wavelength of 850 nm, the fiber has bending losses below 0.2 dB for 2 turns for a radius of curvature of 5 mm.

The invention makes it possible to improve in particular the bend resistance of 62.5 $\mu$m MMFs (i.e. a fiber with an inner core having a diameter of 62.5 $\mu$m) and of 80 $\mu$m MMFs (i.e. a fiber with an inner core having a diameter of 80 $\mu$m).

The modal structure of a Graded-Index MultiMode Fiber (GI-MMF) is as follows.

In multimode fibers with the following index profile:

$$n(r) = \begin{cases} n_1 \cdot \sqrt{1 - 2\Delta \cdot \left(\dfrac{r}{a}\right)^\alpha} \ \text{for} \ r \leq a \\ n_1 \cdot \sqrt{1 - 2\Delta} \ \text{for} \ r \geq a \end{cases}, \qquad \text{(Equation 3)}$$

where $\alpha$ is comprised between 1.9 and 2.1, $\Delta$ > 1.2% and a > 30 $\mu$m, the effective indices of the guided modes can be fairly approximated as follows:

$$\beta = kn_1 \cdot \left[1 - 2\Delta\left(\frac{m}{M}\right)^{\alpha/\alpha+2}\right]^{1/2} \qquad \text{(Equation 4)}$$

4

where m is the order of the mode and $M = akn_1 \cdot \sqrt{\Delta \cdot \dfrac{\alpha}{\alpha+2}}$ ,

where $k = \dfrac{2\pi}{\lambda}$, , with $\lambda$ = 850 nm here.

For $\alpha \approx 2$, the spacing between modes is somewhat independent from the mode order m and is only a function of the inner core radius a and the inner core height $\Delta$:

$$|\Delta\beta| \propto \frac{\sqrt{2\Delta}}{a} \qquad\qquad\qquad \text{(Equation 5)}$$

For a 50 $\mu$m GI-MMF with $\Delta$ = 0.9% and a = 26 $\mu$m, which is the worst case combination, taking account of spreading inherent to large scale production, this mode spacing is equal to $5.1\times10^{-3}$ $\mu$m$^{-1}$.

This spacing is critical for microbending losses. Indeed, considering the three following examples, the larger the criterion $\sqrt{2\Delta}/a$ is, the lower the microbending losses are:

Table 1

| $\Delta$ (%) | $r_1$ ($\mu$m) | Criterion ($\mu$m-1) | Microbending losses @ 850nm (dB) | Primary coating thickness ($\mu$m) |
|---|---|---|---|---|
| 1.928 | 38.8 | $5.06\times10^{-3}$ | 27.5 | 27.935 |
| 2.059 | 39.2 | $5.17\times10^{-3}$ | 20.3 | 27.93 |
| 2.601 | 38.4 | $2.93\times10^{-3}$ | 12.1 | 27.75 |

Therefore, according to the invention, this ratio is kept above the limit of the 50 $\mu$m GI-MMF, namely:

$$\frac{\sqrt{2\Delta}}{a} \geq 5.1\times10^{-3} \ \mu\text{m}^{-1}$$

More preferably,

$$\frac{\sqrt{2\Delta}}{a} \geq 5.4\times10^{-3} \ \mu\text{m}^{-1}.$$

As a consequence, large radii lead to large values of $\Delta$, as shown in Table 1 below.

Table 1

| a ($\mu$m) | $\Delta$ (%) | NA |
|---|---|---|
| 25 | > 0.81 | > 0.185 |
| 31.25 | > 1.27 | > 0.232 |
| 40 | > 2.08 | > 0.297 |
| 50 | > 3.25 | > 0.373 |

For such a large NA, the macro-bending losses are expected to be low for a person skilled in the art of MMFs.

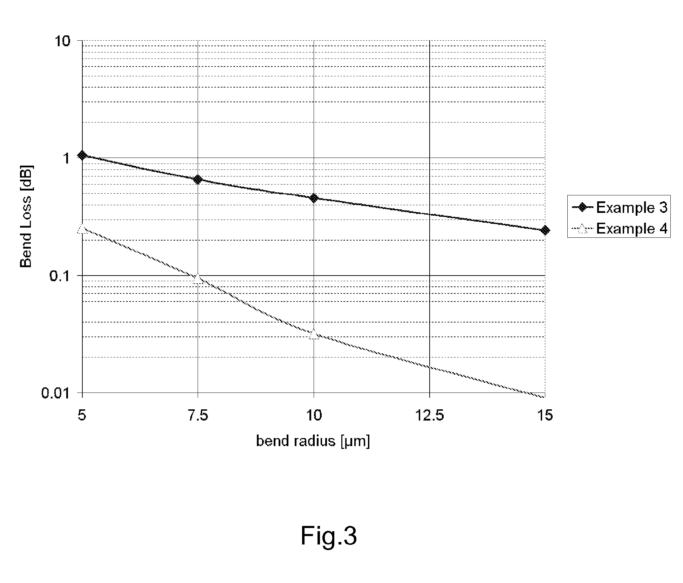

However, according to the invention, the addition of a depressed trench within the cladding further improves the macro-bending behavior of these large radii MMFs, as shown by **Figures 2 and 3**, which show macrobending losses (in dB) as a function of the radius of curvature (or bend radius).

Figure 2 corresponds to a bending for 2 turns according to Recommendation G.651.1, whereas Figure 3 corresponds to a bending of 2 turns under a given Encircled Flux Launch (EFL). The Encircled Flux (EF) in the fiber before the bend fulfills the following criterion:

| radius ($\mu$m) | EF min | EF max |
|---|---|---|
| 10 | 0.2185 | 0.0635 |
| 15 | 0.38 | 0.2215 |
| 20 | 0.5249 | 0.4999 |

For 62.5 $\mu$m and 50 $\mu$m fibers, the conditions on the EF for macrobending loss measurements are given by Recommendation G.651.1 that points out to the IEC 61280-4-1 documents, which contain the EF templates.

Both Figures 2 and 3 correspond to the fibers having parameters listed in Table 2 below.

Table 2

| Examples | a ($\mu$m) | NA | Trench width ($\mu$m) | Trench depth ($\times 10^{-3}$) | Bending losses 2 turns 5 mm (dB) |
|---|---|---|---|---|---|
| 1 | 31.25 | 0.27 | not applicable | not applicable | 0.739 |
| 2 | 31.25 | 0.27 | 4 | -8 | 0.138 |
| 3 | 41 | 0.31 | not applicable | not applicable | 1.060 |
| 4 | 41 | 0.31 | 4 | -8 | 0.253 |

Examples 2 and 4 are fibers according to the invention, with a depressed trench having an appropriate width (i.e. $r_3$-$r_2$) and depth (i.e. $\Delta n_3$). Examples 1 and 3 are comparative examples with prior art fibers without any depressed trench.

The bending losses are measured at a wavelength of 850 nm.

It can be seen that the addition of the trench makes it possible to significantly reduce the bending losses, by dividing them by a factor of approximately at least 4.

**Claims**

1. A multimode optical fiber comprising an optical core surrounded by an outer cladding, said optical core comprising, from the center to the periphery:

   an inner core having a graded-index profile n(r) with a relative refractive index percent $\Delta = \dfrac{n_0^2 - n_{cl}^2}{2n_0^2}$ , where $n_0$ is the maximum refractive index value of the inner core and $n_{cl}$ is the refractive index value of the outer cladding, and having a radius $r_1$ comprised between 30 $\mu$m and 50 $\mu$m, and wherein $\dfrac{\sqrt{2\Delta}}{r_1}$ is greater than or equal to $5.1 \times 10^{-3}$ $\mu$m$^{-1}$,
   an inner cladding having a radius $r_2$, wherein $r_2$-$r_1$ is comprised between 1 $\mu$m and 3 $\mu$m,
   a depressed trench having a radius $r_3$, wherein $r_3$-$r_2$ is comprised between 3 $\mu$m and 7 $\mu$m and having a negative refractive index difference $\Delta n_3$ with respect to the outer cladding comprised between -10$\times 10^{-3}$ and -5$\times 10^{-3}$,

   wherein, at a wavelength of 850 nm, the fiber has bending losses below 0.3 dB for 2 turns for a radius of curvature of 5 mm.

2. An optical fiber according to claim 1, wherein $\dfrac{\sqrt{2\Delta}}{r_1}$ is greater than or equal to $5.4 \times 10^{-3}$ $\mu$m$^{-1}$.

3. An optical fiber according to claim 1 or 2, wherein the radius $r_1$ of the inner core is comprised between 35 $\mu$m and 50 $\mu$m.

4. An optical fiber according to claim 1, 2 or 3, wherein, at a wavelength of 850 nm, the fiber has bending losses below 0.2 dB for 2 turns for a radius of curvature of 5 mm.

5. An optical fiber according to any of the preceding claims, wherein the inner core has a diameter of 62.5 $\mu$m.

6. An optical fiber according to any of claims 1 to 4, wherein the inner core has a diameter of 80 $\mu$m.

7. An optical system comprising at least a portion of a multimode optical fiber according to any of the preceding claims.

Fig.1

Fig.2

Fig.3

Europäisches
Patentamt
European
Patent Office
Office européen
des brevets

# EUROPEAN SEARCH REPORT

Application Number

EP 11 30 5328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 903 918 B1 (BICKHAM SCOTT ROBERTSON [US] ET AL) 8 March 2011 (2011-03-08) * the whole document * | 1-7 | INV. G02B6/028 G02B6/036 |
| A | YABRE G: "COMPREHENSIVE THEORY OF DISPERSION IN GRADED-INDEX OPTICAL FIBERS", JOURNAL OF LIGHTWAVE TECHNOLOGY, IEEE SERVICE CENTER, NEW YORK, NY, US, vol. 18, no. 2, 1 February 2000 (2000-02-01), pages 166-177, XP001001811, ISSN: 0733-8724, DOI: DOI:10.1109/50.822789 * page 171 * | 1-7 | |
| A | PATLAKH A ET AL: "Light transmission of bend insensitive optical fiber", ELECTRICAL AND ELECTRONICS ENGINEERS IN ISRAEL (IEEEI), 2010 IEEE 26TH CONVENTION OF, IEEE, PISCATAWAY, NJ, USA, 17 November 2010 (2010-11-17), pages 141-145, XP031830469, ISBN: 978-1-4244-8681-6 * the whole document * | 1-7 | |
| A | BROSIG J A: "Spatial frequency-based microbending fiber optic sensor", FREQUENCY CONTROL SYMPOSIUM, 1995. 49TH., PROCEEDINGS OF THE 1995 IEEE INTERNATIONAL SAN FRANCISCO, CA, USA 31 MAY-2 JUNE 1995, NEW YORK, NY, USA,IEEE, US, 31 May 1995 (1995-05-31), pages 885-893, XP010155265, DOI: DOI:10.1109/FREQ.1995.484100 ISBN: 978-0-7803-2500-5 * page 886 - page 887 * | 1-7 | |

TECHNICAL FIELDS SEARCHED (IPC)

G02B

-/--

The present search report has been drawn up for all claims

| Place of search | Date of completion of the search | Examiner |
|---|---|---|
| Munich | 2 August 2011 | Riblet, Philippe |

EPO FORM 1503 03.82 (P04C01)

Europäisches
Patentamt

European
Patent Office

Office européen
des brevets

# EUROPEAN SEARCH REPORT

Application Number

EP 11 30 5328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/044596 A1 (ZHANG FANGHAI [CN] ET AL) 24 February 2011 (2011-02-24) * the whole document * ----- | 1-7 | |
| A | WO 2010/036684 A2 (CORNING INC [US]; BENNETT RANDY L [US]; BICKHAM SCOTT R [US]; DAINESE) 1 April 2010 (2010-04-01) * figures 1-2; table 1 * ----- | 1-7 | |

TECHNICAL FIELDS
SEARCHED        (IPC)

The present search report has been drawn up for all claims

| Place of search | Date of completion of the search | Examiner |
|---|---|---|
| Munich | 2 August 2011 | Riblet, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 30 5328

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2011

| Patent document cited in search report | | Publication date | Patent family member(s) | Publication date |
|---|---|---|---|---|
| US 7903918 | B1 | 08-03-2011 | NONE | |
| US 2011044596 | A1 | 24-02-2011 | NONE | |
| WO 2010036684 | A2 | 01-04-2010 | EP 2340451 A2 | 06-07-2011 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010036684 A

**Non-patent literature cited in the description**

- **D. GLOGE et al.** Multimode theory of graded-core fibers. *Bell System Technical Journal,* 1973, 1563-1578

- **G. YABRE.** Comprehensive theory of dispersion in graded-index optical fibers. *Journal of Lightwave Technology,* February 2000, vol. 18 (2), 166-177